# EUROPÄISCHE PATENTSCHRIFT

(11) **EP 0 906 167 B1**
(45) Veröffentlichungstag und Bekanntmachung des Hinweises auf die Patenterteilung: **08.12.1999**
(21) Anmeldenummer: 97920712.3
(22) Anmeldetag: 18.04.1997
(51) Int. Cl.: B23K 37/04, B23K 26/08, B65G 19/26

(54) **VERFAHREN ZUM TRANSPORT VON BLECHTAFELN ZU EINER KONTINUIERLICH ARBEITENDEN SCHWEISSVORRICHTUNG UND VORRICHTUNG ZUR DURCHFÜHRUNG DES VERFAHRENS**
PROCESS FOR TAKING METAL SHEETS TO A CONTINUOUSLY OPERATING WELDING MACHINE AND DEVICE FOR IMPLEMENTING IT
PROCEDE PERMETTANT D'ACHEMINER DES FEUILLES DE TOLE JUSQU'A UN DISPOSITIF DE SOUDAGE FONCTIONNANT EN CONTINU ET DISPOSITIF PERMETTANT DE METTRE LEDIT PROCEDE EN OEUVRE

(30) Priorität: 15.05.1996 DE 19619608
(43) Veröffentlichungstag der Anmeldung: 07.04.1999
(73) Patentinhaber: THYSSEN INDUSTRIE AG, 45128 Essen (DE)
(72) Erfinder: ALBER, Gerhard, D-88213 Ravensburg (DE); RETZBACH, Martin, D-88250 Weingarten (DE); SCHMEH, Alexander, D-88213 Ravensburg (DE)
(74) Vertreter: Dahlkamp, Heinrich-Leopold, Dipl.-Ing.
(86) Internationale Anmeldenummer: EP9701946
(87) Internationale Veröffentlichungsnummer: WO9743083

(56) Entgegenhaltungen:
- EP-A- 0 600 757
- DE-A- 3 502 279
- DE-A- 4 028 635
- US-A- 3 110 391

## Beschreibung

Die Erfindung bezieht sich auf ein Verfahren zum Transport von Blechtafeln zu einer kontinuierlich arbeitenden Schweißvorrichtung, vorzugsweise einer Laserstrahlschweißvorrichtung, wobei die zu verschweißenden Blechtafeln mit Hilfe einer umlaufenden Fördervorrichtung und darauf befestigten Mitnehmern zur Schweißvorrichtung transportiert werden und eine Vorrichtung zur Durchführung des Verfahrens mit einer umlaufenden Fördervorrichtung, vorzugsweise einer Schleppkette, einem Zahnriemen oder einem Transportband und damit verbundenen Mitnehmern.

Beim Aneinanderschweißen von Blechtafeln in einer kontinuierlich arbeitenden Schweißmaschine werden die zu verschweißenden Blechtafeln einem Schweißkopf mittels umlaufender Fördervorrichtungen bzw. mit darauf montierten Blechtafelmitnehmern zugeführt.

Aus der EP 0 600 757 B1 ist eine gattungsgemäße Vorrichtung zum Transportieren der Blechtafeln auf einem Übergabetisch zu einer Laserschweißvorrichtung bekannt, wobei nebeneinander abwechselnd Kugelschienen und Bänder mit regelmäßig beabstandeten, nach oben vorstehenden Pufferteilen als Mitnehmer angeordnet sind. Die Mitnehmer sind dabei entsprechend der Blechtafellänge fest auf den Bändern angeordnet. Eine Änderung des Abstandes der Mitnehmer ist hierbei nicht vorgesehen bzw. ohne weiteres nicht möglich, höchstens durch Auswechseln der Bänder.

Bei der Konstruktion einer Schweißmaschine wird die Fördervorrichtung und auch der Abstand der Mitnehmer üblicherweise auf eine einer bestimmten Blechtafelbelegung entsprechende Länge festgelegt. Dadurch wird erreicht, daß bezogen auf diese Blechtafellänge eine optimierte Lücke zwischen zwei hintereinander liegenden Blechtafeln von z. B. 80 mm besteht. Will man nun aber auf der vorhandenen Schweißmaschine mit ihrer vorhandenen Länge der Fördervorrichtung Blechtafeln anderer Länge verarbeiten, ändert sich immer wieder die Lücke zwischen zwei Blechtafeln, was zu unterschiedlich langer Unterbrechung des Schweißvorganges und zu einer nicht optimalen Ausnutzung der Schweißvorrichtung führt. Bei einer Änderung der Blechtafellänge besteht nun die Problematik, daß die Länge der Fördervorrichtung und der Abstand zwischen zwei Mitnehmern nicht so ohne weiteres geändert werden kann. Man war bisher also gezwungen, den Abstand der Mitnehmer auf eine maximale Blechtafellänge einzustellen mit der Folge, daß bei einer verringerten Blechtafellänge der Abstand zwischen den einzelnen Blechtafeln größer wurde und zu einer Verringerung des Wirkungsgrades der Anlage führte.

Darüber hinaus hat man versucht, bei einer Änderung der Blechtafellänge den Abstand zwischen zwei Mitnehmern jeweils manuell so zu verändern, daß wiederum die optimale Lücke zwischen den Blechtafeln bestand. Da aber die Gesamtlänge der Fördervorrichtung nicht geändert werden kann, ergab sich hierbei in regelmäßigen Abständen immer wieder eine deutlich längere Lücke. Diese eine Lückenlänge entspricht dem Überhang, der sich durch das Aufteilen der Blechtafeln auf die Schleppkette ergibt.

Da beide Möglichkeiten der Anpassung nicht optimal sind und zu Produktionsnebenzeiten bzw. zu finanziellen Verlusten führen, liegt die Erfindung die Aufgabe zugrunde, ein gattungsgemäßes Verfahren und eine entsprechende Vorrichtung zur Durchführung des Verfahrens vorzuschlagen, bei dem optimierte Lücken unabhängig von der Länge der zu verschweißenden Blechtafeln bei einer vorhandenen gleichbleibenden Länge der Fördervorrichtung realisiert werden.

Lösungen dieser Aufgabe sind jeweils in den Ansprüchen 1 und 5 angegeben. Die Unteransprüche 2 bis 4 und 6 bis 12 enthalten sinnvolle ergänzende Maßnahmen bzw. Ausführungsformen dazu.

Die Erfindung sieht also vor, daß auf der Fördervorrichtung in gleichmäßigem geringen Abstand eine Vielzahl von Mitnehmern angeordnet wird. Bei einer als Schleppkette ausgeführten Fördervorrichtung ist dabei zweckmäßig jedem Kettenglied ein Mitnehmer zugeordnet. Entsprechend einem vorgegebenen optimierten Folgeabstand der Blechtafeln wird dann jeweils ein bestimmter zugehöriger Mitnehmer unmittelbar vor dem Auflegen der Blechtafeln auf die Fördervorrichtung von einer entsprechenden Betätigungseinrichtung aktiviert und im Rücklaufbereich automatisch inaktiviert. Die Betätigungseinrichtung kann dabei entsprechend einer vorgegebenen, z. B. in einer Steuereinrichtung einprogrammierten Blechtafellänge aktiviert werden.

Es hat sich aber auch als günstig erwiesen, vor dem Auflegen der Blechtafeln als Maß für den zurückgelegten Weg der Fördervorrichtung die Anzahl der an einer Meßvorrichtung entlang bewegten Mitnehmer zu registrieren und bei Erreichen der vorgegebenen Anzahl der Mitnehmer den für die verwendeten Blechtafeln festgelegten Mitnehmer an einer ganz bestimmten Stelle oder zu einem ganz bestimmten Zeitpunkt zu aktivieren. Da der Abstand aller auf der Fördervorrichtung angeordneten Mitnehmer gleich ist, ist die Anzahl der von der Meßvorrichtung gezählten Mitnehmer jeweils automatisch ein sicheres Maß für den eingestellten Abstand zwischen zwei aktivierten Mitnehmern. Zusätzlich oder alternativ hierzu kann auch durch einen am Antriebsmotor der Fördervorrichtung angeordneten Inkrementalgeber der Bereich der Fördervorrichtung frei programmierbar definiert werden, an dem ein Mitnehmer aktiviert werden soll.

Die sogenannte Zählvorrichtung befindet sich zweckmäßigerweise am vorderen Umlenkrad der Fördervorrichtung, wobei auf einem Kreis gleichmäßig verteilt jeweils einem Mitnehmer zugeordnete Registrierelemente angeordnet sind, die an einer stationären Meßeinrichtung vorbeibewegt werden und jeweils einen Zählimpuls für einen Mitnehmer auslösen.

Bei der erfindungsgemäße Vorrichtung zur Durchführung des Verfahrens besteht die umlaufende Fördervorrichtung vorzugsweise aus einer Schleppkette, einem Zahnriemen oder einem Transportband und einer Vielzahl darauf im gleichmäßigen Abstand hintereinander angeordneten aktivier- und inaktivierbaren Mitnehmern, im Rücklauf- oder Leerlaufbereich der Fördervorrichtung angeordnete entsprechende Einrichtungen zur Inaktivierung und Aktivierung, an der Fördervorrichtung angeordneten Einrichtungen zur Messen und Registrierung der Anzahl der vorbeibewegten Mitnehmer und damit in Verbindung stehenden entsprechend steuerbaren Betätigungseinrichtungen zur Aktivierung der vorgegebenen Mitnehmer.

Zur Aktivierung und Inaktivierung sind die Mitnehmer jeweils an der Fördervorrichtung um eine waagerechte Drehachse schwenkbar gelagert und sowohl in der aktiven als auch inaktiven Position arretierbar. Zur Arretierung ist dabei ein federbelasteter Verriegelungsbolzen vorgesehen, der insbesondere im aktivierten Zustand ein Zurückklappen des Mitnehmers verhindert. In der inaktiven Stellung des Mitnehmers ist es lediglich erforderlich, daß durch eine geringe Federkraft ein Zurückdrehen des Mitnehmers in die aktive Position verhindert wird. Die Einrichtung zur Inaktivierung der Mitnehmer besteht aus einer Kulissenführung, wobei der federbelastete Verriegelungsbolzen gegen die Federkraft zurückgedrückt wird und mit einem rotierenden Flügelrad oder einer ähnlichen Einrichtung der Mitnehmer aus der aktiven in die inaktive Stellung zurückgeklappt werden kann. Am Ende der Kulissenführung drückt der federbelastete Verriegelungsbolzen wiederum in eine Aussparung an der Oberfläche des Mitnehmers und verhindert so ein Aufklappen.

Die Betätigungseinrichtung zur Aktivierung eines Mitnehmers besteht aus einem drehbar an einem Gehäuse befestigten Hebel, der kurzzeitig von außen gegen den Mitnehmer bewegbar ist und zu einer Drehung des Mitnehmers führt, bis er aktiviert ist. Zur Betätigung hat sich ein Elektro-Hubmagnet bewährt, der an dem Hebel angreift und in kürzester Zeit den entsprechenden Mitnehmer aktivieren kann. Die Drehbewegung des Hebels bzw. der Weg der Betätigungseinrichtung wird zweckmäßigerweise durch einstellbare Abstandshalter auf ein Minimum begrenzt.

Die Erfindung wird anhand der beigefügten Figuren 1 bis 8 beispielsweise näher erläutert. Es zeigen
- Figur 1: eine komplette Schweißmaschine in der Seitenansicht
- Figur 2: schematisch die Anordnung der Blechtafeln auf einer Fördervorrichtung
- Figur 3: einige Kettenglieder einer Schleppkette mit zugehörigen Mitnehmern
- Figur 4: die Einzelheit 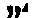 X" nach Figur 1 im vergrößerten Ausschnitt
- Figur 5: eine andere Ansicht zu Figur 4
- Figuren 6, 7 und 8: in verschiedenen Ansichten die Einrichtung zur Inaktivierung.

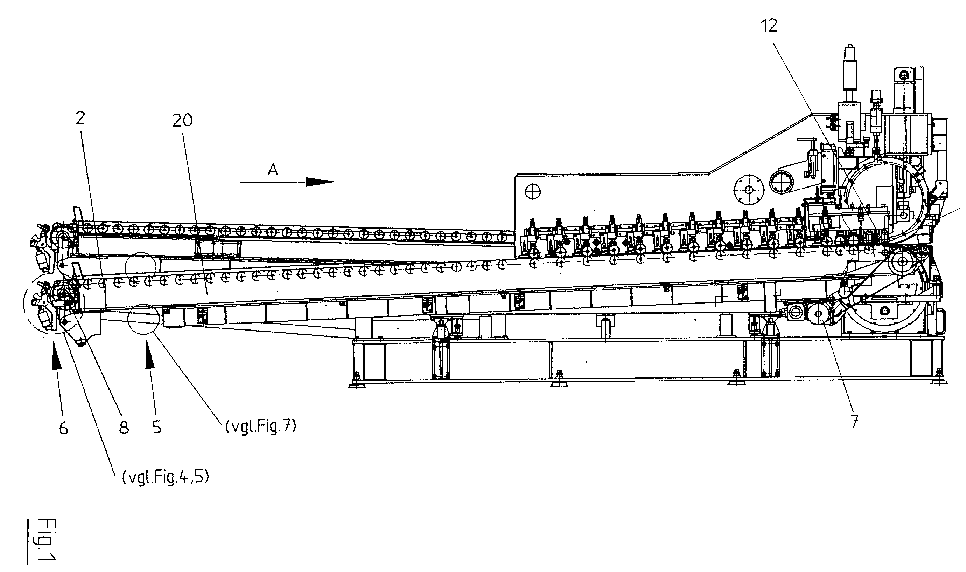

Bei der üblichen Schweißanlage nach Figur 1 werden die Blechtafeln kurz hinter dem vorderen Umlenkrad 8 auf die umlaufende Fördervorrichtung 2, die aus einer Schleppkette, einem Zahnriemen oder einem sonstigen Transportband bestehen kann, aufgelegt und in Transportrichtung A nach rechts bis zum Laserstrahlschweißkopf 12 transportiert. Die Fördervorrichtung 2 wird von elektrischen Servomotoren angetrieben. Durch einen am Servomotor montierten Inkrementalgeber 7 wird frei programmierbar der Bereich definiert, an welcher Schleppkettenstelle ein Blechtafelmitnehmer 3 wieder aktiviert bzw. hochgeklappt werden soll.

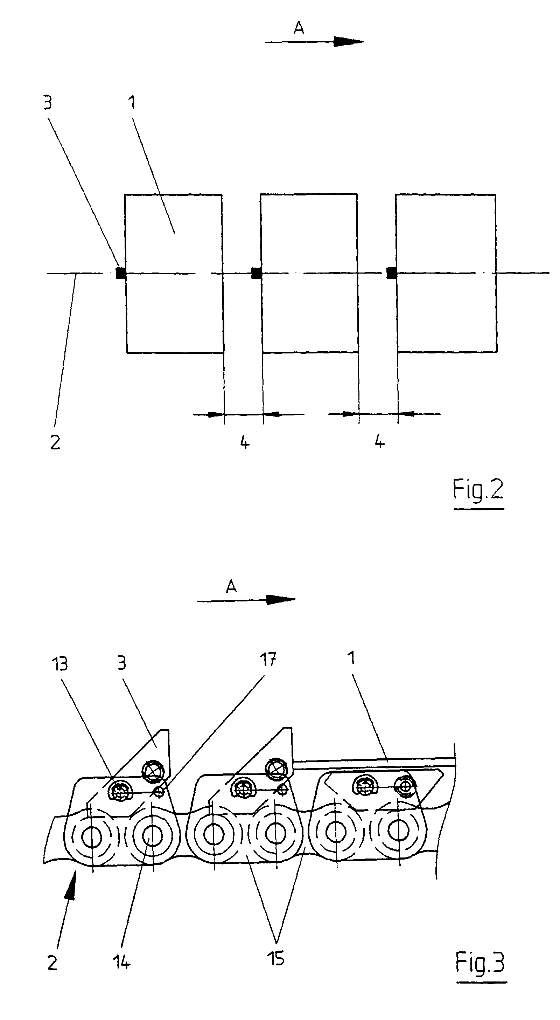

In Figur 2 ist schematisch dargestellt, daß die Blechtafeln 1 mit Hilfe auf der Fördervorrichtung 2 angeordneter Mitnehmer 3 mit genau definiertem Folgeabstand bzw. Lücke 4 transportiert werden.

Nach Figur 3 besteht die Fördervorrichtung 2 aus einer Schleppkette mit Kettengliedern 15 und zugehörigen Bolzen 14. Mit jeweils einem Paar von Bolzen 14 bzw. einem Kettenglied 15 ist eine Halterung 16 für einen Mitnehmer 3 verbunden. Der Mitnehmer 3 ist mit seiner Drehachse 13 mit der Halterung 16 verbunden. In der aktivierten Stellung ragt das vordere Ende des Mitnehmers 3 nach oben und wird durch den federbelasteten Verriegelungsbolzen 17 gegen ein Herunterklappen gesichert.

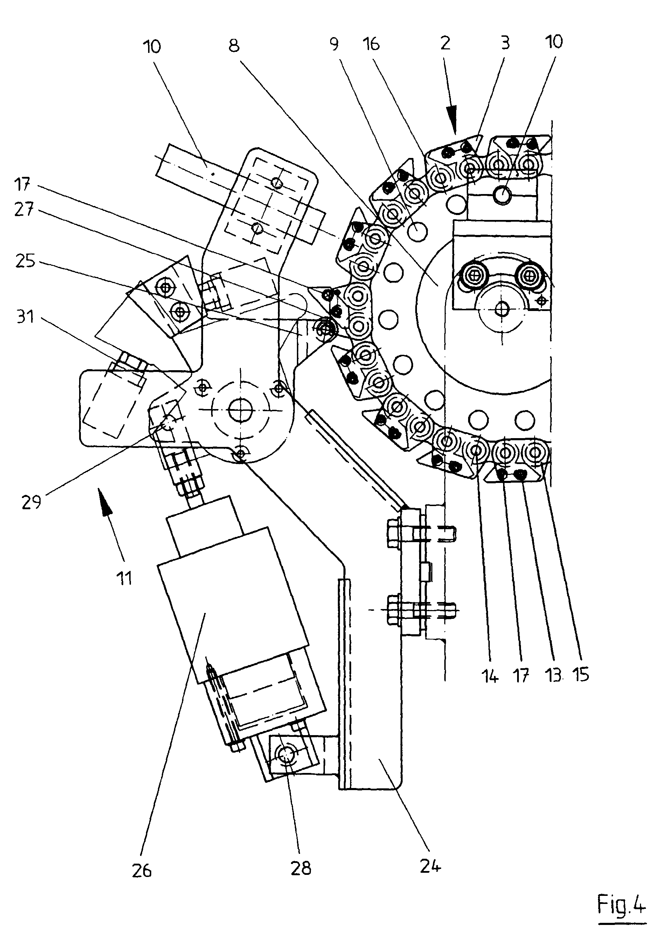

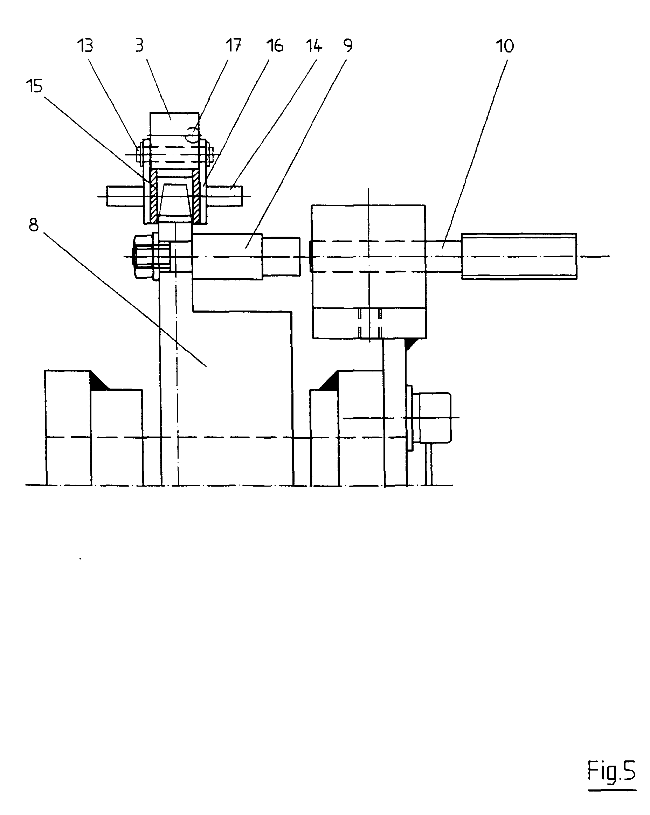

Die Figuren 4 und 5 zeigen ausschnittsweise das vordere Umlenkrad 8, auf dem die Schleppkette 2 mit den daran befestigten Mitnehmern 3 umgelenkt wird. Auf dem Umlenkrad 8 sind auf einem Kreis gleichmäßig verteilt Registrierelemente 9 angeordnet, die, wie insbesondere aus Figur 5 ersichtlich ist, aus seitlich herausstehenden Bolzen mit einer senkrechten Stirnfläche bestehen. Die Registrierelemente 9 sind auf dem Umlenkrad 8 so angeordnet, daß jedem Kettenglied 15 bzw. jedem Mitnehmer 3 genau ein Registrierelement 9 zugeordnet ist. Beim Drehen des Umlenkrades 8 werden die Registrierelemente 9 an einer stationären Meßeinrichtung 10 (Näherungsinitiator, berührungsloser Schalter) mit geringem Abstand vorbeibewegt. Dabei wird durch die vorbeibewegten Registrierelemente 9 fortlaufend der Näherungsinitiator bzw. die Meßeinrichtung ein- und ausgeschaltet. Hierdurch kann auf einfache Weise die Anzahl der vorbeibewegten Registrierelemente 9 bzw. Mitnehmer 3 gezählt werden.

In der elektrischen Steuerung der Schweißmaschine ist eine Und-Verknüpfung vorprogrammiert, so daß bei Erreichen einer gewissen vorgegebenen Anzahl von vorbeibewegten Registrierelementen das Signal zur Aktivierung an die Betätigungseinrichtung 6, 11 gegeben wird. Diese Betätigungseinrichtung besteht aus einem Elektro-Hubmagneten 26, der über die Befestigung 29 mit einem Hebel 25 verbunden ist. Am Ende des Hebels 25 ist eine Rolle 27 angeordnet, die bei Aktivierung kurzfristig von außen gegen das eine Ende des Mitnehmers 3 drückt, so daß dieser um die Drehachse 13 in die aktivierte Stellung gebracht wird. Der federbelastete Verriegelungsbolzen 17 verhindert dann, daß der Mitnehmer wieder zurückklappt. Der Elektro-Hubmagnet 26 ist über die Befestigung 28 mit dem feststehenden Gehäuse 24 verbunden. Die einstellbaren Abstandshalter 30 und 31 sorgen im wesentlichen für eine Justierung und Begrenzung der Schwenkbewegung des Hebels 25.

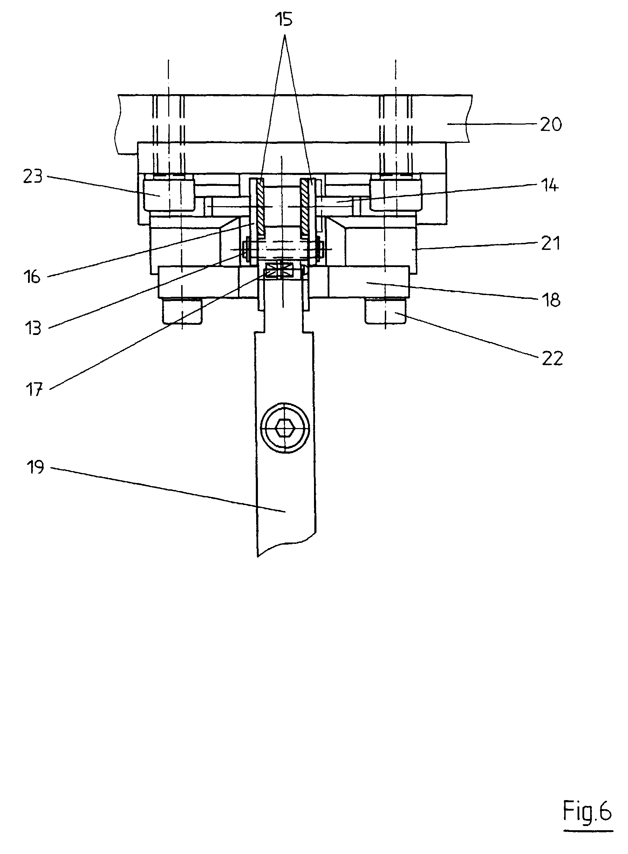

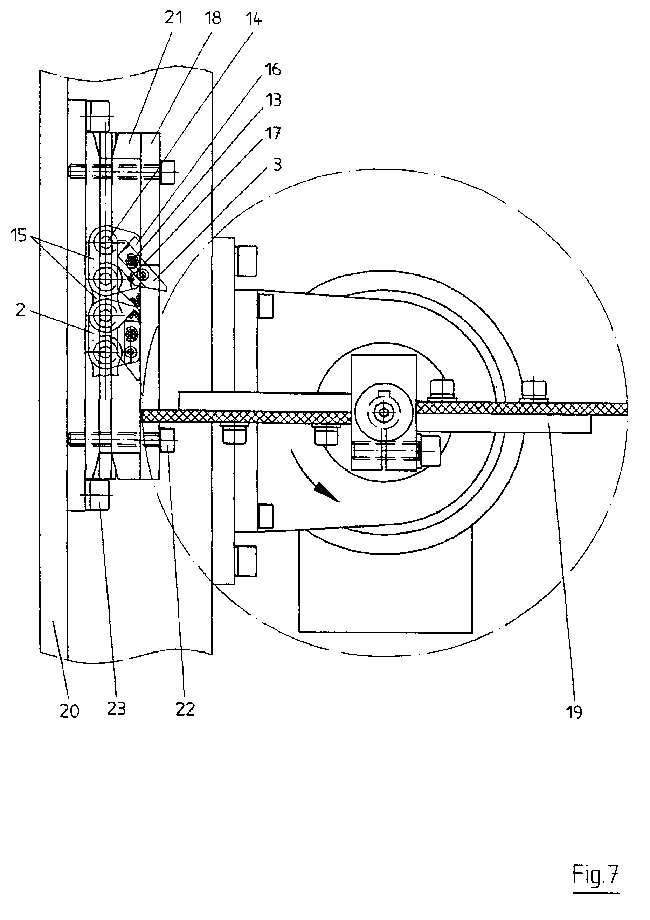

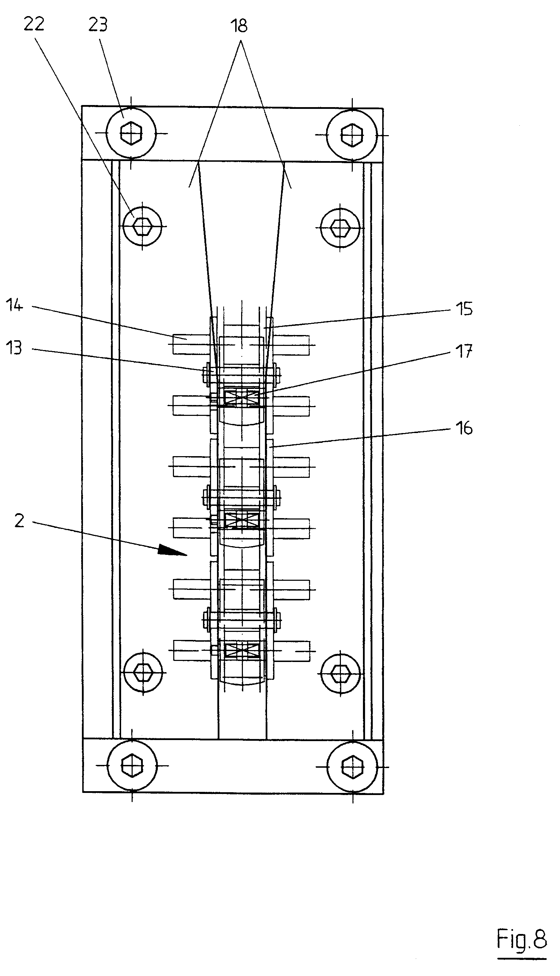

Die Einrichtung 5 zur Inaktivierung der Mitnehmer 3 nach den Figuren 6, 7 und 8 ist unterhalb des feststehenden Trägers 20 angeordnet. Dort werden beim Rücklauf B die Schleppketten 2 mit den daran befestigten Mitnehmern durch eine Kulissenführung 18 gezogen und dabei die federbelasteten Verriegelungsbolzen 17 der aktivierten Mitnehmer 3 soweit zurückgedrückt, daß mit Hilfe eines sich gegen den Uhrzeigersinn drehenden Flügelrades 19 die entsprechenden Mitnehmer 3 in die inaktive Stellung zurückgeklappt werden können. Die Bolzen 14 der einzelnen Kettenglieder 15 stehen an beiden Seiten nach außen vor und werden in der Führungsschiene 21 bewegt. Kulissenführung 18 und Führungsschiene 21 sind jeweils mit Befestigungsschrauben 22 und 23 mit dem Träger 20 verbunden.

### Bezugszeichenliste

- (1): Blechtafel
- (2): umlaufende Fördervorrichtung, Schleppkette, Zahnriemen, Transportband
- (3): Mitnehmer an (2) für (1)
- (4): Lücke zwischen Blechtafeln (1)
- (5): Einrichtung zur Inaktivierung von (3)
- (6): Einrichtung zur Aktivierung von (3)
- (7): Inkrementalgeber am Antriebsmotor
- (8): vorderes Umlenkrad
- (9): Registrierelement, seitlich herausstehende Bolzen
- (10): stationäre Meßeinrichtung, Näherungsinitiator, berührungsloser Schalter
- (11): Betätigungseinrichtung zur Aktivierung von (3)
- (12): Schweißkopf
- (13): Drehachse von (3)
- (14): Bolzen
- (15): Kettenglieder
- (16): Halterungen für (3)
- (17): federbelasteter Verriegelungsbolzen
- (18): Kulissenführung
- (19): rotierendes Flügelrad
- (20): feststehender Träger von (2)
- (21): Führungsschiene für (14)
- (22): Schrauben zur Befestigung von (21) an (20)
- (23): Schrauben zur Befestigung von (18) an (20)
- (24): Gehäuse
- (25): Hebel
- (26): Hubeinrichtung, Elektro-Hubmagnet
- (27): Rolle an (25)
- (28): Befestigung von (26) an (24)
- (29): Befestigung von (26) an (25)
- (30): einstellbarer Abstandshalter
- (31): einstellbarer Abstandshalter
- A: Transportrichtung von (2) (Vorlauf)
- B: Bewegungsrichtung von (2) (Rücklauf)

## Patentansprüche

1. Verfahren zum Transport von Blechtafeln zu einer kontinuierlich arbeitenden Schweißvorrichtung, vorzugsweise einer Laserstrahlschweißvorrichtung, wobei die zu verschweißenden Blechtafeln mit Hilfe einer umlaufenden Fördervorrichtung und darauf befestigten Mitnehmern zur Schweißvorrichtung transportiert werden, **dadurch gekennzeichnet**, daß auf der Fördervorrichtung im gleichmäßigen geringen Abstand eine Vielzahl von Mitnehmern angeordnet wird und entsprechend einem vorgegebenen, optimierten Folgeabstand der Blechtafeln die zu diesen Positionen gehörigen entsprechenden Mitnehmer vor dem Auflegen der Blechtafeln aktiviert werden und im Rücklaufbereich automatisch inaktiviert werden.

2. Verfahren nach Anspruch 1, **dadurch gekennzeichnet,** daß vor dem Auflegen der Blechtafeln die Anzahl der an einer Meßvorrichtung entlang bewegten Mitnehmer registriert und bei Erreichen der vorgegebenen Anzahl der Mitnehmer der festgelegte Mitnehmer an einer ganz bestimmten Stelle oder zu einem ganz bestimmten Zeitpunkt aktiviert wird.

3. Verfahren nach Anspruch 1 oder 2, **dadurch gekennzeichnet,** daß durch einen am Antriebsmotor der Fördervorrichtung angeordneten Inkrementalgeber der Bereich der Fördervorrichtung frei programmierbar definiert wird, in dem ein Mitnehmer aktiviert werden soll.

4. Verfahren nach Anspruch 1, 2 oder 3, **dadurch gekennzeichnet,** daß am vorderen Umlenkrad der Fördervorrichtung auf einem Kreis gleichmäßig verteilt jeweils einem Mitnehmer zugeordnete Registrierelemente angeordnet sind, die an einer stationären Meßeinrichtung vorbeibewegt werden und jeweils einen Zählimpuls für einen Mitnehmer auslösen.

5. Vorrichtung zur Durchführung des Verfahrens nach mindestens einem der vorgehenden Ansprüche mit einer umlaufenden Fördervorrichtung, vorzugsweise einer Schleppkette, einem Zahnriemen oder einem Transportband und damit verbundenen Mitnehmern, **dadurch gekennzeichnet,** daß
a) auf der Fördervorrichtung (2) in gleichmäßigem Abstand hintereinander eine Vielzahl von aktivier- und inaktivierbaren Mitnehmern (3) angeordnet ist,
b) den Mitnehmern (3) im Rücklauf- oder Leerlaufbereich der Fördervorrichtung (2) jeweils Einrichtungen zur Inaktivierung (5) und Aktivierung (6) der Mitnehmer zugeordnet sind,
c) an der Fördervorrichtung (2) Einrichtungen (9), (10) zur Messung und Registrierung der vorbeibewegten Anzahl der Mitnehmer angeordnet sind, die
d) zur Aktivierung des vorgebenen Mitnehmers mit einer Betätigungseinrichtung (11) in Verbindung stehen.

6. Vorrichtung nach Anspruch 5, **dadurch gekennzeichnet,** daß die Mitnehmer (3) an der Fördervorrichtung (2) um eine waagerechte Drehachse (13) schwenkbar gelagert sind und sowohl in der aktiven als auch inaktiven Position arretierbar sind.

7. Vorrichtung nach Anspruch 6, **dadurch gekennzeichnet,** daß zur Arretierung ein federbelasteter Verriegelungsbolzen (17) vorgesehen ist.

8. Vorrichtung nach einem der Ansprüche 5, 6 oder 7, **dadurch gekennzeichnet,** daß die Einrichtung zur Inaktivierung (5) der Mitnehmer (3) aus einer Kulissenführung (18) zur Entriegelung der federbelasteten Verriegelungsbolzen (17) und einem rotierenden Flügelrad (19) zum Zurückklappen der Mitnehmer (3) besteht.

9. Vorrichtung nach mindestens einem der vorhergehenden Ansprüche, **dadurch gekennzeichnet,** daß am vorderen Umlenkrad (8) auf einer Kreisbahn gleichmäßig verteilt jeweils einem Mitnehmer (3) zugeordnete Registrierelemente (9) angeordnet sind, die in geringem Abstand einer stationären Meßeinrichtung (10) gegenüberliegen.

10. Vorrichtung nach mindestens einem der vorhergehenden Ansprüche, **dadurch gekennzeichnet,** daß die Betätigungseinrichtung (11) aus einem drehbar an einem Gehäuse (24) befestigten Hebel (25) besteht, der zur Aktivierung eines Mitnehmers (3) kurzzeitig von außen gegen den Mitnehmer (3) bewegbar ist.

11. Vorrichtung nach Anspruch 10, **dadurch gekennzeichnet,** daß der Hebel (25) mit einem Elektro-Hubmagneten (26) zu betätigen ist.

12. Vorrichtung nach Anspruch 10 oder 11, **dadurch gekennzeichnet,** daß die Drehbewegung des Hebels (25) zur Aktivierung eines Mitnehmers (3) durch einstellbare Abstandshalter (30), (31) begrenzbar ist.

## Claims

1. Method for taking metal sheets to a continuously operating welding machine, preferably a laser beam welding machine, in which the sheets to be welded are taken to the welding machine with the aid of a circulating conveyor and drivers secured thereto, **characterised in that** a plurality of drivers is fitted on the conveyor at equal short distances and that the drivers corresponding to these positions are activated in a pre-determined optimised sequence of metal sheets before the latter are laid upon the conveyor and automatically de-activated during the return passage.

2. Method according to Claim 1, **characterised in that** the number of drivers moved past a measuring device is registrated before said metal sheets are laid upon and that the pre-determined driver is activated at a distinct position or at a distinct point of time as the defined number of drivers has been reached.

3. Method according to Claim 1 or 2, **characterised in that** the range of the conveyor in which a driver is to be activated is defined in a freely programmable manner by way of an incremental path encoder mounted to the drive motor of the conveyor.

4. Method according to Claim 1, 2, or 3, **characterised in that** registrating elements equally spread on a circle at the front deflector wheel of the conveyor are allocated to one driver each which are moved past a stationary measuring device and which trigger one counting impulse for one driver each.

5. Device for execution of the method in accordance with at least one of the preceding claims, provided with a circulating conveyor, preferably a conveyor chain, a toothed belt or a transport belt and drivers connected thereto, **characterised in that**
a) a plurality of activatable and de-activatable drivers (3) is located on the conveyor (2) one after another at regular distance;
b) devices for de-activation (5) and activation (6) of drivers are allocated to the drivers (3) in return passage and idle mode of the conveyor (2);
c) devices (9), (10) for measurement and registration of the number of drivers moved past are arranged at the conveyor (2)
d) a connection with the actuation device (11) is provided to activate the pre-determined driver.

6. Device according to Claim 5, **characterised in that** said drivers (3) are pivoted around a horizontal rotating axis (13) at said conveyor (2) and can be arrested both in the active and non-active position.

7. Device according to Claim 6, **characterised in that** a spring-loaded locking bolt (17) is provided for arresting.

8. Device according to any one of the preceding Claims 5, 6, or 7, **characterised in that** the device for de-activation (5) of drivers (3) consists of a crank guide (18) for release of the spring-loaded locking bolts (17) and a rotating impeller wheel (19) for swinging-back of drivers (3).

9. Device according to at least one of the preceding claims, **characterised in that** registrating elements (9) arranged at the front deflector wheel (8), equally spread on a circle, are allocated to one driver (3) each, said registrating elements lying opposite to a stationary measuring device (10) at a small distance.

10. Device according to at least one of the preceding claims, **characterised in that** the actuation device (11) consists of a lever (25) affixed in rotatable arrangement at a casing (24), said lever being movable for a short time from outside against said driver (3) to activate said driver (3).

11. Device according to Claim 10, **characterised in that** said lever (25) can be actuated by an electric stroke magnet (26).

12. Device according to Claim 10 or 11, **characterised in that** the rotating movement of said lever (25) to activate a driver (3) can be limited by adjustable spacers (30), (31).

## Revendications

1. Procédé permettant d'acheminer les feuilles de tôle jusqu'à un dispositif de soudage fonctionnant en continu, de préférence un dispositif de soudage au laser, les feuilles de tôle à souder étant acheminées jusqu'au dispositif de soudage au moyen d'un convoyeur rotatif et d'entraîneurs fixés dessus, **caractérisé en ce qu'**un nombre multiple d'entraîneurs sont placés sur le convoyeur à intervalles réduits et réguliers et que conformément à un écart de succession optimisé prédéterminé des feuilles de tôle, les entraîneurs correspondants affectés à ces positions sont activés avant la pose des feuilles de tôle et inactivés automatiquement dans la zone de marche arrière.

2. Procédé selon la revendication 1 **caractérisé en ce qu'**avant la pose des feuilles de tôle, le nombre des entraîneurs défilant devant un dispositif de mesurage est enregistré et que lorsque le nombre d'entraîneurs est atteint, l'entraîneur désigné est activé à un endroit exactement déterminé ou à un moment exactement déterminé.

3. Procédé selon la revendication 1 ou 2 **caractérisé en ce que** la zone du convoyeur dans laquelle un entraîneur doit être activé est librement programmable grâce à un capteur incrémentiel placé sur le moteur d'entraînement du convoyeur.

4. Procédé selon la revendication 1, 2 ou 3 **caractérisé en ce que** des éléments d'enregistrement affectés à un entraîneur respectif sont situés sur la poulie de guidage avant du convoyeur et uniformément répartis sur un cercle, lesdits éléments d'enregistrement défilant devant un dispositif de mesurage stationnaire et déclenchant à chaque fois une impulsion de comptage pour un entraîneur.

5. Dispositif permettant de mettre le procédé en oeuvre selon au moins l'une des revendications précédentes avec un convoyeur rotatif, de préférence un convoyeur à chaînes, une courroie dentée ou une bande convoyeuse et des entraîneurs qui y sont reliés, **caractérisé en ce que**
a) un nombre multiple d'entraîneurs (3) activés et inactivés sont placés sur le convoyeur (2) les uns derrière les autres avec un écart régulier,
b) des dispositifs d'inactivation (5) et d'activation (6) des entraîneurs sont respectivement affectés aux entraîneurs (3) dans la zone de marche arrière ou de marche à vide du convoyeur (2),
c) des dispositifs (9), (10) pour le mesurage et l'enregistrement du nombre d'entraîneurs qui défilent devant le dispositif de mesurage sont placés sur le convoyeur (2),
d) lesdits dispositifs étant reliés à un dispositif de manoeuvre (11) pour permettre l'activation de l'entraîneur prédéterminé.

6. Dispositif selon la revendication 5, **caractérisé en ce que** les entraîneurs (3) pivotent autour d'un axe de rotation (13) horizontal au niveau du convoyeur (2) et qu'ils peuvent être bloqués aussi bien en position active qu'en position inactive.

7. Dispositif selon la revendication 6, **caractérisé en ce qu'**un axe de verrouillage commandé par ressort (17) est prévu pour assurer le blocage.

8. Dispositif selon une des revendications 5, 6 ou 7 **caractérisé en ce que** le dispositif d'inactivation (5) des entraîneurs (3) est constitué par un guide de coulisse (18) permettant le déverrouillage des axes de verrouillage commandés par ressorts et d'une roue à hélice rotative (19) permettant le redressage des entraîneurs (3).

9. Dispositif selon au moins une des revendications précédentes **caractérisé en ce que** des éléments d'enregistrement (9) respectivement affectés à un entraîneur (3) sont situés sur la poule de guidage avant du convoyeur et uniformément répartis sur un cercle, lesdits éléments d'enregistrement se trouvant à une faible distance d'un dispositif de mesurage stationnaire (10).

10. Dispositif selon au moins une des revendications précédentes **caractérisé en ce que** le dispositif de manoeuvre (11) est constitué par un lever (25) rotatif fixé sur un boîtier, ledit dispositif pouvant être déplacé pour un court moment de l'extérieur contre l'entraîneur pour activer cet entraîneur (3).

11. Dispositif selon la revendication 10 **caractérisé en ce que** le levier (25) doit être actionné au moyen d'un électroaimant de levage (26).

12. Dispositif selon la revendication 10 ou 11 **caractérisé en ce que** le mouvement de rotation du lever (25) permettant l'activation d'un entraîneur (3) peut être limité par des écarteurs (30), (31) réglables.
